(19) Europäisches Patentamt
European Patent Office
Office européen des brevets

(11) Veröffentlichungsnummer: **0 053 750**
**A1**

# (12) EUROPÄISCHE PATENTANMELDUNG

(21) Anmeldenummer: 81109832.6

(22) Anmeldetag: 23.11.81

(51) Int. Cl.³: C 09 B 62/085
D 06 P 3/66, D 06 P 3/10

(30) Priorität: 04.12.80 DE 3045789

(43) Veröffentlichungstag der Anmeldung: 16.06.82 Patentblatt 82/24

(84) Benannte Vertragsstaaten: CH DE FR GB LI

(71) Anmelder: BAYER AG
Zentralbereich Patente, Marken und Lizenzen
D-5090 Leverkusen 1, Bayerwerk(DE)

(72) Erfinder: Jäger, Horst, Dr.
Carl-Rumpff-Strasse 37
D-5090 Leverkusen 1(DE)

(72) Erfinder: Henk, Hermann, Dr.
Roggendorfstrasse 55
D-5000 Köln 80(DE)

## (54) Faserreaktive Azofarbstoffe, Verfahren zu ihrer Herstellung und ihre Verwendung zum Färben und Bedrucken von hydroxylgruppen- und/oder stickstoffhaltigen Fasermaterialien.

(57) Die Erfindung betrifft neue faserreaktive Azofarbstoffe der Formel

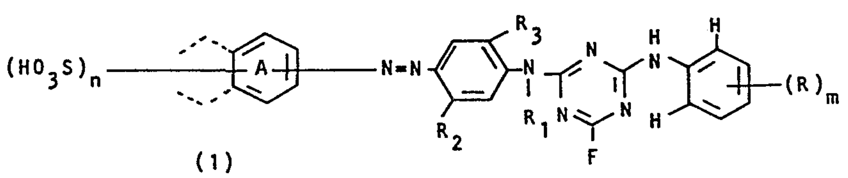

(1)

worin
der Benzol- bzw. Naphthalinring A außer den $SO_3H$- Gruppen noch weitere Substituenten enthalten kann und die Reste R, $R_1$ bis $R_3$ sowie m und n die im Anmeldungstext angegebene Bedeutung besitzen.

Sie betrifft weiterhin Verfahren zu ihrer Herstellung und ihre Verwendung zum Färben und Bedrucken von hydroxylgruppen- und/oder stickstoffhaltigen Fasermaterialien.

EP 0 053 750 A1

0053750

BAYER AKTIENGESELLSCHAFT 5090 Leverkusen, Bayerwerk

Zentralbereich
Patente, Marken und Lizenzen Er/Kü-c

# Faserreaktive Azofarbstoffe, Verfahren zu ihrer Herstellung und ihre Verwendung zum Färben und Bedrucken von hydroxylgruppen- und/oder stickstoffhaltigen Fasermaterialien

Die Erfindung betrifft neue faserreaktive Azofarbstoffe der Formel

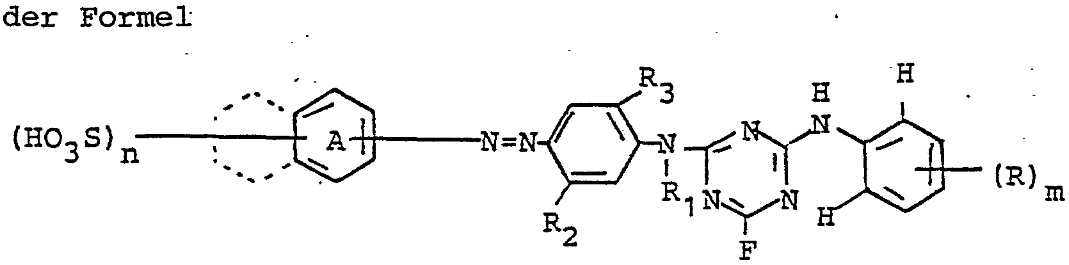

(I)

worin

der Benzol- bzw. Naphthalinring A außer den $SO_3H$-Gruppen noch weitere Substituenten enthalten kann

R = Substituent, welcher in neutralem wäßrigem Medium nicht dissoziiert

$R_1$ = Wasserstoff, oder $C_1$-$C_4$-Alkyl

$R_2$ = Wasserstoff, gegebenenfalls substituiertes $C_1$-$C_4$-Alkyl, gegebenenfalls substituiertes $C_1$-$C_4$-Alkoxy, gegebenenfalls substituiertes Acylamino der Formel

NH - CO - $R_4$

wobei $R_4$ für gegebenenfalls substituiertes $C_1$-$C_4$-Alkyl, gegebenenfalls substituiertes Aryl, gegebenenfalls substituiertes Amino, Wasserstoff oder COOH steht

$R_3$ = Wasserstoff, gegebenenfalls substituiertes $C_1$-$C_4$-Alkyl, gegebenenfalls subsituiertes $C_1$-$C_4$-Alkoxy, COOH, $SO_3H$ oder Halogen

n = 1, 2 oder 3

m = 0, 1 oder 2.

Als mögliche zusätzliche Substituenten für den Benzol- bzw. Naphthalinring A kommen beispielsweise in Frage:

Halogenatome wie Fluor, Chlor oder Brom, $C_1$-$C_4$-Alkyl wie Methyl, Ethyl, n-Propyl, $C_1$-$C_4$-Alkoxy wie Methoxy, Ethoxy, iso-Propoxy, n-Butoxy, Acylamino wie Acetylamino, Formylamino, Oxalylamino, Nitro, Carboxy, Amino, wobei die vorgenannten $C_1$-$C_4$-Alkoxyreste noch substituiert sein können, z.B. durch OH, Halogen, CN und andere.

Als Substituenten R, welche im neutralen wäßrigen Medium nicht diisozieren kommen vorzugsweise in Frage:

Gegebenenfalls durch Alkyl ($C_1$-$C_4$) substituiertes Sulfonylamino, Alkoxy($C_1$-$C_4$)carbonyl, Carbonamido, CN, gegegebenenfalls durch OH substituiertes Alkyl($C_1$-$C_4$), gegebenenfalls durch OH, Alkoxy($C_1$-$C_4$) substituiertes Alkoxy($C_1$-$C_4$); Acylamino, welches gegebenenfalls durch Halogen, OH, Alkyl($C_1$-$C_4$) substituiert ist.

Als Beispiele für den Rest R seien aufgeführt: Fluor, Chlor, Brom, $SO_2NH_2$, $SO_2NHCH_3$, $SO_2N)CH_3)_2$, $SO_2NHC_2H_5$, $SO_2NH-CH_2-CH_2OH$, $SO_2N(CH_3)CH_2-CH_2OH$, $COOCH_3$, $COOC_2H_5$, $CONH_2$, $CONHCH_3$, $CO-N(CH_3)_2$, $CONHC_2H_5$, CN, $CH_3$, $C_2H_5$, $C_3H_7$, $C_4H_9$, $CH_2OH$, $OCH_3$, $OC_2H_5$, $O-C_2H_4OH$, $O-CH_2-CH_2-OCH_3$, $O-CH_2-CH_2-OC_2H_5$, $NH-COCH_3$, $NH-CO-CH_2OH$, $NH-CO-CH_2Cl$, $NH-CO-NH_2$, $NH-CO-NH-CH_2-CH_2OH$, $NH-CO-NHCH_3$, $NH-CON(CH_3)_2$.

Beispiele für $R_1$ = $C_1$-$C_4$-Alkyl sind: Methyl, Ethyl, n-Propyl, i-Propyl, n-Butyl, z-Butyl, t-Butyl.

Als Substituenten für gegebenenfalls substituiertes $C_1$-$C_4$-Alkyl $R_2$, $R_3$, $R_4$ sowie für gegebenenfalls substituiertes $C_1$-$C_4$-Alkoxy $R_2$, $R_3$ kommen beispielsweise in Frage: OH, $SO_3H$, COOH, Halogen, CN.

Aryl $R_4$ steht vorzugsweise für Phenyl und Naphthyl. Als Substituenten für gegebenenfalls substituiertes Aryl kommen vorzugsweise in Betracht:

OH, $SO_3H$, COOH, Halogen, CN.

Im folgenden seien einige charakteristische Acylaminogruppen des Typs NH-CO-$R_4$ aufgeführt:

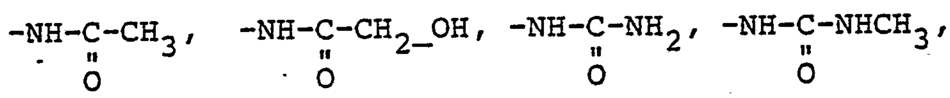

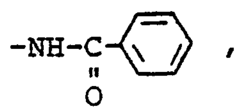

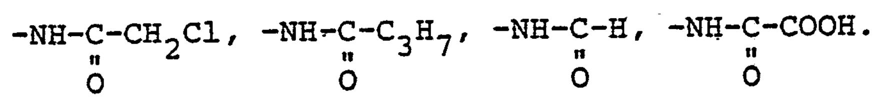

Als Halogen $R_3$ kommt insbesondere Chlor in Frage.

Bevorzugt sind Farbstoffe der Formeln (II) bis (V):

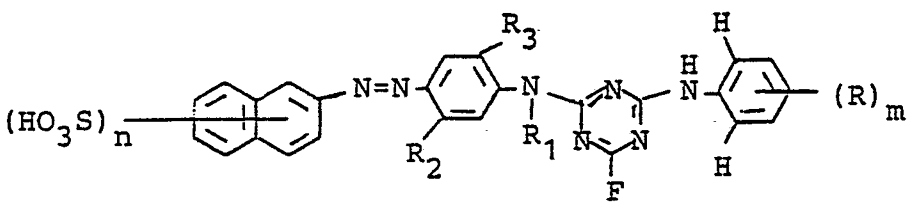 (II)

worin
R, $R_1$, $R_2$, $R_3$, m und n die oben angegebene Bedeutung haben;

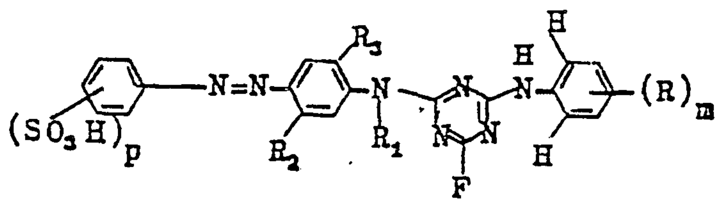 (III)

worin

R, $R_1$, $R_2$, $R_3$ und m die oben angegebene Bedeutung haben und p = 1 oder 2;

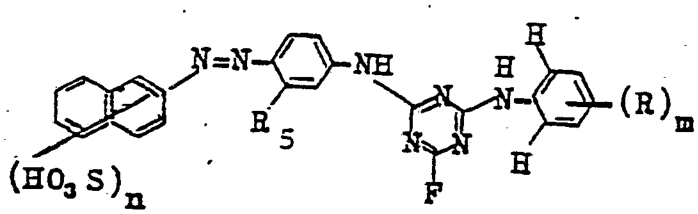 (IV)

worin

R, m und n die oben angegebene Bedeutung haben und $R_5$ = Methyl, Acetylamino oder Ureido;

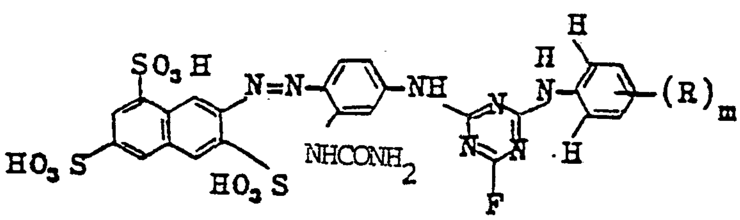 (V)

worin

R und m die angegebene Bedeutung haben.

Besonders bevorzugt sind Farbstoffe der Formeln II - V, in denen

m = 0 bzw. solche, in denen

m = 1 und

R = $CH_3$, $OCH_3$ oder Cl.

Gegenstand der Erfindung sind weiterhin Verfahren zur Herstellung der Farbstoffe (I). Insbesondere ist folgende Arbeitsweise von Bedeutung:

Der Farbstoff der Formel

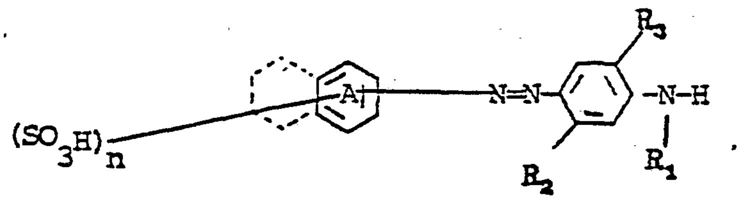

(VI)

worin

$R_1$, $R_2$, $R_3$, A und n die oben angegebene Bedeutung haben, wird mit 2,4,6-Trifluor-1,3,5-triazin unter Abspaltung von HF kondensiert und die resultierende Difluorverbindung mit einem Amin der Formel

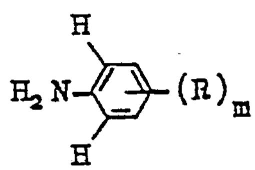

(VII)

worin

R und m die angegebene Bedeutung haben, unter Abspaltung von HF zu (I) umgesetzt.

Die Kondensation der Farbstoffe (VI) mit dem s-Trifluortriazin erfolgt vorzugsweise in wäßriger Lösung oder Suspension, bei niedriger Temperatur (ca. -2° - ca. +2°C) und bei schwach saurem, neutralem bis schwach alkalischen pH-Wert.

Vorteilhaft wird die Kondensation im pH-Bereich von 3 - 7, insbesondere 5,5 - 6,5, ausgeführt. Der freiwerdende Fluorwasserstoff wird durch Zugabe wäßriger Alkalihydroxyde, -carbonate oder -bicarbonate abgestumpft. Die Umsetzung der Difluorverbindung mit den Aminen (VII) erfolgt ebenfalls vorzugsweise in wäßriger Lösung oder Suspension, bei niedriger Temperatur und bei neutralem bis schwach saurem pH-Wert. Der bei der Kondensation freiwerdende Fluorwasserstoff wird durch Zugabe wäßriger Alkalihydroxyde, -carbonate oder -bicarbonate neutralisiert.
Auf eine Isolierung der Difluorverbindung wird im allgemeinen verzichtet.

Beispiele für Amine (VII) sind folgende:

1-Amino-3- oder -4-methylbenzol, 1-Amino-3,4- oder -3,5-dimethylbenzol, 1-Amino-3- oder -4-ethylbenzol, 1-Amino-3- oder -4-methoxybenzol, 1-Amino-4-ethoxybenzol, 1-Amino-3- oder -4-(2-hydroxyethoxy)-benzol, 1-Amino-3- oder -4-(2-methoxyethoxy)-benzol, 1-Amino-3- oder -4-chlorbenzol, 3- oder 4-Aminobenzolsulfonamid, 3- oder 4-Aminobenzolsulfonsäuremethylamid, 3- oder 4-Aminobenzolsulfonsäuredimethylamid, 3- oder 4-Aminobenzolsulfonsäure-(2-hydroxyethyl)-amid, 3- oder

4-Aminobenzamid, 3- oder 4-Aminobenzoesäuremethyl- oder -ethylester, 3- oder 4-Aminobenzonitril, 3-Amino-(N-phenylsulfonyl)-benzolsulfonamid, 3- oder 4-Aminophenol, 1-Acetylamino-3- oder -4-aminobenzol, 1-Amino-3- oder -4-(hydroxy-acetyl)-aminobenzol, 3- oder 4-Aminophenylharnstoff, N-(3-Aminophenyl)-N'-(2-hydroxyethyl)-harnstoff.

Man kann die Farbstoffe (I) auch so herstellen, daß man die Farbstoffe (VI) mit einem Aminodifluortriazin der Formel

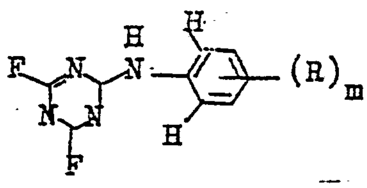

(VIII)

worin

R und m die oben angegebenene Bedeutung haben, unter Abspaltung von Fluorwasserstoffsäure umsetzt. Diese Kondensation erfolgt vorzugsweise in wäßriger Lösung oder Suspension, bei niedriger Temperatur vorzugsweise bei 0°C und schwach saurem, neutralem bis schwach alkalischem pH-Wert. Vorteilhaft wird der bei der Kondensation freiwerdende Fluorwasserstoff laufend durch Zugabe wäßriger Alkalihydroxyde, -carbonate oder -bicarconate neutralisiert.

Als Beispiele für Difluortriazinverbindungen seien folgende erwähnt:

2,4-Difluor-6-p-chlorphenylamino-1,3,5-triazin,
2,4-Difluor-6-m-chlorphenylamino-1,3,5-triazin,
2,4-Difluor-6-p-methoxyphenylamino-1,3,5-triazin,
2,4-Difluor-6-m-methoxyphenylamino-1,3,5-triazin
2,4-Difluor-6-(3',4'-dimethylphenylamino)-1,3,5-triazin

Die als Ausgangsstoffe zur Herstellung der faserreaktiven Azofarbstoffe der Formel (I) verwendeten Azoverbindungen der Formel (VI) werden durch Diazotierung von Aminobenzolsulfonsäuren bzw. Aminonaphthalinsulfonsäuren und Kupplung auf entsprechende Kupplungskomponenten der Benzolreihe mit einer -NHR-Gruppe erhalten.

Die Diazotierung erfolgt in der Regel durch Einwirkung salpetriger Säure in wäßrig-mineralsaurer Lösung bei tiefer Temperatur, die Kupplung bei schwach sauren, neutralen bis schwach alkalischen pH-Werten.

Als Diazo- bzw. Kupplungskomponenten, die zur Herstellung der Azoverbindungen der Formel (I) verwendet werden können, seien genannt:

Diazokomponenten:
1-Aminobenzol-2-, -3- und -4-sulfonsäure,
1-Aminobenzol-2,4- und -2,5-disulfonsäure,
1-Amino-4-methylbenzol-2-sulfonsäure,
1-Amino-3-methylbenzol-6-sulfonsäure,
1-Amino-6-methylbenzol-3- oder -4-sulfonsäure,
1-Amino-2,4-dimethylbenzol-6-sulfonsäure,
1-Amino-4- oder -5-chlorbenzol-2-sulfonsäure,
1-Amino-6-chlorbenzol-3- oder -4-sulfonsäure,
1-Amino-3,4-dichlorbenzol-6-sulfonsäure,
1-Amino-2,5-dichlorbenzol-4-sulfonsäure,
1-Amino-4-methyl-5-chlorbenzol-2-sulfonsäure,
1-Amino-5-methyl-4-chlorbenzol-2-sulfonsäure,
1-Amino-4- oder -5-methoxybenzol-2-sulfonsäure,

1-Amino-6-methoxybenzol-3- oder -4-sulfonsäure,
1-Amino-6-äthoxybenzol-3- oder -4-sulfonsäure,
1-Amino-2,4-dimethoxybenzol-6-sulfonsäure,
1-Amino-2,5-dimethoxybenzol-4-sulfonsäure,
1-Amino-3-acetylaminobenzol-6-sulfonsäure,
1-Amino-4-acetylaminobenzol-2-sulfonsäure,
1-Amino-3-acetylamino-4-methylbenzol-6-sulfonsäure,
1-Amino-4-methoxybenzol-2,5-disulfonsäure,
1-Amino-4-methyl-2,5-disulfonsäure,
1-Amino-2-carboxybenzol-4- oder -5-sulfonsäure,
1-Aminonaphthalin-2-, -4-, -5-, -6-, -7- oder -8-sulfonsäure,
2-Aminonaphthalin-1-, -5- oder -6-sulfonsäure,
1-Aminonaphthalin-3,6- oder -5,7-disulfonsäure,
2-Aminonaphthalin-1,5-, -1,7-, -3,6-, -5,7-, -4,8- oder -6,8-disulfonsäure,
1-Aminonaphthalin-2,5,7-trisulfonsäure,
2-Aminonaphthalin-1,5,7-, -3,6,8- oder -4,6,8-trisulfonsäure.

Kupplungskomponenten:

Aminobenzol, N-Methyl-, -Äthyl- oder -Butylaminobenzol, 1-Amino-2- oder -3-methylbenzol, 1-Methylamino-3-methylbenzol, 1-Äthylamino-3-methylbenzol, 1-Amino-2,5-dimethylbenzol, 1-Amino-2,5-diethylbenzol, 1-Amino-2-ethoxybenzol, 1-Amino-3-acetylaminobenzol, 1-Amino-3-ureidobenzol, 1-Amino-3-hydroxyacetylaminobenzol, 1-Amino-3-sulfoacetylaminobenzol, 1-Amino-3-methyl-6-methoxybenzol, 1-Amino-3-acetylamino-6-methylbenzol, 1-Amino-3-acetyl-amino-6-methoxybenzol, 1-Amino-3-ureido-6-methylbenzol, 1-Amino-2-methoxy-5-methylbenzol, 1-Amino-3-sulfatoacetylamino-benzol.

Die neuen Farbstoffe eignen sich zum Färben und Bedrucken von Hydroxyl- oder Amidgruppen enthaltenden Materialien, wie Textilfasern-, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln der Farbstoffe sind die der entsprechenden freien Säuren. Die Farbstoffe wurden im allgemeinen in Form der Alkalisalze, insbesondere der Na-Salze isoliert und zum Färben eingesetzt.

Beispiel 1

54,5 g des Farbstoffs der Formel 3,6,8-Trisulfonaphthalin 2 azo 4 1-Amion-3-ureido-benzol werden in einem Gemisch aus 400 ml Wasser und 300 g Eis angerührt. Man tropft 13,5 g Trifluortriazin ein, wobei man die freiwerdende Flußsäure durch 20 %ige Sodalösung in dem Maße abstumpft, daß der pH-Wert zwischen 6 und 6,5 liegt. Die erhaltene Lösung, in der sich kein Ausgangsmaterial mehr nachweisen läßt, versetzt man mit 9,3 g Anilin und tropft bei 0-10°C 10 %ige Sodalösung ein, um den pH zwischen 6,0 und 6,5 zu halten. Nach beendeter Acylierung wird der Farbstoff ausgeslazen, abfiltriert, getrocknet und gemahlen. Man erhält ein organges Farbstoffpulver, das sich leicht in Wasser mit rotstichig gelber Farbe löst. Der Farbstoff entspricht der Formel

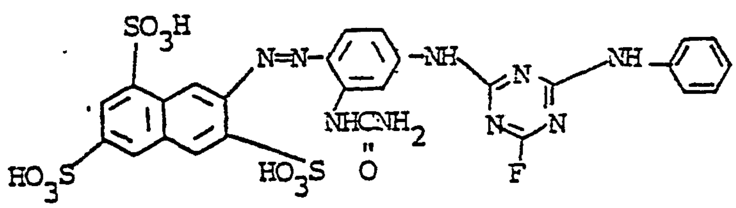

Durch Eindampfen oder Sprühtrocknung des ganzen Reaktionsgemische kann der Farbstoff ebenfalls isoliert werden.

Färbebeispiele

Druckvorschrift

Wenn man Baumwollnessel mit einer Druckpaste bedruckt, die im Kilogramm 20 g des nach Beispiel 1) dargestellten Farbstoffs, 100 g Harnstoff, 300 ml Wasser, 500 g Alginatverdickung (60 g Natriumalginat / kg Verdickung) und 10 g Soda enthält, und die mit Wasser auf 1 kg

aufgefüllt wurde, trocknet, 1 Minute bei 103°C dämpft, mit heißem Wasser spült und kochend seift, so erhält man einen rotstichig gelben Druck von guter Naß- und Lichtechtheit.

Klotzvorschrift

30 Teile des nach Beispiel 1) dargestellten Farbstoffs werden in 1000 Teilen Wasser gelöst. Mit dieser Lösung wird ein Baumwollgewebe fouladiert und bis zu einer Gewichtsabnahme von 90 % abgepreßt. Die noch feuchte Baumwolle wird bei 70°C während 30 Minuten in einem Bad, welches in 1000 Teilen Wasser, 300 Teile kalziniertes Natriumsulfat und 10 Teile kalziniertes Natriumcarbonat gelöst enthält, behandelt. Anschließend wird die Färbung in üblicher Weise fertiggestellt. Man erhält ein rotstichiges Gelb mit vorzüglichen Naß- und Lichtechtheiten.

Färbevorschrift

In einem Färbebecher von 300 ml Inhalt, der sich in einem beheizbaren Wasserbad befindet, werden 168 ml Wasser von 20 - 25°C vorgelegt. Man teigt 0,3 g des nach Beispiel 1) erhaltenen Farbstoffs mit 2 ml kaltem Wasser gut an und fügt 30 ml heißes Wasser (70°C) zu; dabei löst sich der Farbstoff auf. Die Farbstofflösung wird dem vorgelegten Wasser zugegeben und 10 g Baumwollgarn in dieser Färbeflotte ständig in Bewegung gehalten. Innerhalb von 10 Minuten erhöht man die Temperatur der Färbeflotte auf 40 - 50°C, setzt 10 g wasserfreies Natriumsulfat zu und färbt 30 Minuten weiter. Dann fügt man der Färbeflotte 4 g wasserfreies Natriumcarbonat zu und färbt 60 Minuten bei 40 - 50°C. Man entnimmt dann das gefärbte Material der Färbeflotte, entfernt die anhaftende Flotte durch

Auswringen oder Abpressen und spült das Material zunächst mit kaltem Wasser und dann mit heißem Wasser so lange, bis die Spülflotte nicht mehr angeblutet wird. Anschließend wird das gefärbte Material in 200 ml einer Flotte, die 0,2 g Natriumalkylsulfat enthält, während 20 Minuten bei Siedetemperatur geseift, erneut gespült und bei 60 - 70°C in einem Trockenschrank getrocknet. Man erhält ein rotstichiges Gelb von guter Wasch- und Lichtechtheit.

Verwendet man in Beispiel 1 ansetelle von Anilin 1-Amino-3- oder -4-methylbenzol, 1-Amino-3,4- oder -3,5-dimethylbenzol, 1-Amino-3- oder -4-ethoxybenzol, 1-Amino-3- oder -4-methoxybenzol, 1-Amino-4-ethoxybenzol, 1-Amino-3- oder -4-(2-hydroxyethoxy)-benzol, 1-Amino-3- oder -4-(2-methoxyethoxy)-benzol, 1-Amino-3- oder -4-chlorbenzol, 3- oder 4-Aminobenzolsulfonamid, 3- oder 4-Aminobenzolsulfonsäuremethylamid, 3- oder 4-Aminobenzolsulfonsäuredimethylamid, 3- oder 4-Aminobenzolsulfonsäure-(2-hydroxyethyl)-amid, 3- oder 4-Aminobenzamid, 3- oder 4-Aminobenzoesäuremethyl- oder -ethylester, 3- oder 4-Aminobenzonitril, 3-Amino-(N-phenylsulfonyl)-benzolsulfonamid, 3- oder 4-Aminophenol, 1-Acetylamino-3- oder -4-aminobenzol, 1-Amino-3- oder -4-(hydroxy-acetyl)-aminobenzol, 3- oder 4-Aminophenylharnstoff, N-(3-Aminophenyl)-N'-(2-hydroxyethyl)-harnstoff, so resultieren gleichfalls wertvolle Farbstoffe mit ähnlichen färberischen Eigenschaften.

Wenn man nach den Angaben von Beispiel 1 verfährt, jedoch anstelle des dort verwendeten Aminoazofarbstoffs äquivalente Mengen der in nachfolgender Tabelle aufgeführten Aminoazofarbstoffe und als Amin für den Austausch des 2. Fluoratoms Anilin, 1-Amino-3- oder -4-methylbenzol, 1-Amino-3,4- oder -3,5-dimethylbenzol, 1-Amino-3- oder -4-ethylbenzol, 1-Amino-3- oder -4-methoxybenzol, 1-Amino-4-ethoxybenzol, 1-Amino-3- oder -4-(2-hydroxyethoxy)-benzol, 1-Amino-3- oder -4-(2-methoxyethoxy)-benzol, 1-Amino-3- oder -4-chlorbenzol, 3- oder 4-Aminobenzolsulfonamid, 3- oder 4-Aminobenzolsulfonsäuremethylamid, 3- oder 4-Aminobenzolsulfonsäuredimethylamid, 3- oder 4-Aminobenzolsulfonsäure-(2-hydroxyethyl)-amid, 3- oder 4-Aminobenzamid, 3- oder 4-Aminobenzoesäuremethyl- oder -ethylester, 3- oder 4-Aminobenzonitril, 3-Amino-(N-phenylsulfonyl)-benzolsulfonamid, 3- oder 4-Aminophenol, 1-Acetylamino-3- oder -4-aminobenzol, 1-Amino-3- oder -4-(hydroxy-acetyl)-aminobenzol, 3- oder 4-Aminophenylharnstoff, N-(3-Aminophenyl)-N'-(2-hydroxyethyl)-harnstoff, verwendet, so resultieren gleichfalls wertvolle Farbstoffe, die Baumwolle in goldgelben Tönen färben.

| Nr. | Aminoazoverbindung aus: Diazokomponente | Kupplungskomponente |
|---|---|---|
| 2 | 1-Aminonaphthalin-3,7-disulfonsäure | Aminobenzol |
| 3 | " | 1-Amino-3-methylbenzol |
| 4 | " | 3-Aminophenylharnstoff |
| 5 | " | 1-Amino-2,5-dimethoxy-benzol |
| 6 | " | 1-Amino-3-acetylamino-6-methoxy-benzol |
| 7 | " | 1-Amino-3-acetylamino-6-methyl-benzol |
| 8 | " | 1-Amino-3-acetylamino-benzol |
| 9 | " | 1-Amino-3-methyl-6-methoxybenzol |
| 10 | " | 1-Amino-3-ureido-6-methylbenzol |
| 11 | " | N-Äthylanilin |
| 12 | " | 1-Äthylamino-3-methylbenzol |
| 13 | " | 1-Amino-2-methylbenzol |
| 14 | " | 1-Amino-2,5-dimethylbenzol |
| 15 | 1-Aminonaphthalin-3,6-disulfonsäure | Aminobenzol |
| 16 | " | 1-Amino-3-methylbenzol |
| 17 | " | 3-Aminophenylharnstoff |
| 18 | " | 1-Amino-2,5-dimethoxy-benzol |
| 19 | " | 1-Amino-3-acetylamino-6-methoxy-benzol |

| Nr. | Aminoazoverbindung aus Diazokomponente | Kupplungskomponente |
|---|---|---|
| 20 | 1-Aminonaphthalin-3,6-Disulfonsäure | 1-Amino-3-acetylamino-6-methyl-benzol |
| 21 | " | 1-Amino-3-acetylamino-benzol |
| 22 | " | 1-Amino-3-methyl-6-methoxybenzol |
| 23 | " | 1-Amino-3-ureido-6-methylbenzol |
| 24 | " | N-Aethylanilin |
| 25 | " | 1-Äthylamino-3-methylbenzol |
| 26 | " | 1-Amino-2-methylbenzol |
| 27 | " | 1-Amino-2,5-dimethylbenzol |
| 28 | 1-Aminonaphthalin-2,5,7-trisulfonsäure | Aminobenzol |
| 29 | " | 1-Amino-3-methylbnezol |
| 30 | " | 3-Aminophenylharnstoff |
| 31 | " | 1-Amino-3-hydroxyacetylamino-benzol |
| 32 | " | 1-Amino-3-acetylamino-6-methoxy-benzol |
| 33 | " | 1-Amino-3-acetylamino-6-methyl-benzol |
| 34 | " | 1-Amino-3-acetylamino-benzol |
| 35 | " | 1-Amino- 2,5-dimethoxy-benzol |

Aminoazoverbindungen aus

| Nr. | Diazokomponente | Kupplungskomponente |
|---|---|---|
| 36 | 1-Aminonaphthalin-2,5,7- tri-sulfonsäure | 1-Amino-3-ureido-6-methylbenzol |
| 37 | " | N-Aethylanilin |
| 38 | " | 1-Aethylamino-3-methylbenzol |
| 39 | " | 1-Amino-3-methoxy-benzol |
| 40 | " | 1-Amino-2,5-dimethylbenzol |
| 41 | 2-Aminonaphthalin-5,7-disulfonsäure | Aminobenzol |
| 42 | " | 1-Amino-3-methylbenzol |
| 43 | " | 3-Aminophenylharnstoff |
| 44 | " | 1-Amino-3-hydroxyacetylaminobenzol |
| 45 | " | 1-Amino-3-methanacetylamino-benzol |
| 46 | " | 1-Amino-2,5-dimethoxybenzol |
| 47 | " | 1-Amino-3-methyl-6-methoxybenzol |
| 48 | " | 1-Amino-3-ureido-6-methylbenzol |
| 49 | " | 1-Amino-2,5-dimethyl-benzol |
| 50 | " | 1-Aethylamino-3-methylbenzol |
| 51 | " | 1-Amino-2-methylbenzol |
| 52 | " | 1-Amino-2,5-dimethylbenzol |

| Nr. | Aminoazoverbindung aus Diazokomponente | Kupplungskomponente |
|---|---|---|
| 53 | 2-Aminonaphthalin-4,8-disulfonsäure | Aminobenzol |
| 54 | " | 1-Amino-3-methylbenzol |
| 55 | " | 3-Aminophenylharnstoff |
| 56 | " | 1-Amino-3-hydroxyacetylamino-benzol |
| 57 | " | 1-Amino-3-acetylamino-6-methoxy-benzol |
| 58 | " | 1-Amino-3-acetylamino-6-methyl-benzol |
| 59 | " | 1-Amino-3-acetylamino-benzol |
| 60 | " | 1-Amino-3-methyl-6-methoxybenzol |
| 61 | " | 1-Amino-3-ureido-6-methylbenzol |
| 62 | " | N-Äthylanilin |
| 63 | " | 1-Äthylamino-3-methylbenzol |
| 64 | " | 1-Amino-3-methoxy-benzol |
| 65 | " | 1-Amino-2,5-dimethylbenzol |
| 66 | 2-Aminonaphthalin-4,6,8-trisulfonsäure | Aminobenzol |
| 67 | " | 1-Amino-3-methylbenzol |
| 68 | " | 3-Aminophenylharnstoff |
| 69 | " | 1-Amino-3-hydroxyacetylamino-benzol |
| 70 | " | 1-Amino-3-acetylamino-6-methoxy-benzol |

Aminoazoverbindung aus

| Nr. | Diazokomponente | Kupplungskomponente |
|---|---|---|
| 71 | 2-Aminonaphthalin-4,6,8-trisulfonsäure | 1-Amino-3-acetylamino-6-methylbenzol |
| 72 | " | 1-Amino-3-acetylaminobenzol |
| 73 | " | 1-Amino-3-methyl-6-methoxybenzol |
| 74 | " | 1-Amino-2,5-dimethoxy-benzol |
| 75 | " | N-Äthylanilin |
| 76 | " | 1-Äthylamino-3-methylbenzol |
| 77 | " | 1-Amino-2-methylbenzol |
| 78 | " | 1-Amino-2,5-dimethylbenzol |
| 79 | 2-Aminonaphthalin-3,6,8-trisulfonsäure | Aminobenzol |
| 80 | " | 1-Amino-3-methylbenzol |
| 81 | " | 1-Amino-3-hydroxyacetylaminobenzol |
| 82 | " | 1-Amino-3-acetylamino-6-methoxybenzol |
| 83 | " | 1-Amino-3-acetylamino-6-methylbenzol |
| 84 | " | 1-Amino-3-acetylaminobenzol |
| 85 | " | 1-Amino-3-methyl-6-methoxybenzol |
| 86 | " | 1-Amino-3-ureido-6-methylbenzol |
| 87 | " | N-Äthylanilin |
| 88 | " | 1-Äthylamino-3-methylbenzol |
| 89 | " | 1-Amino-2-methylbenzol |

Aminoazoverbindung aus

| Nr. | Diazokomponente | Kupplungskomponente |
|---|---|---|
| 90 | 2-Aminonaphthalin-3,6,8-trisulfonsäure | 1-Amino-2,5-dimethylbenzol |
| 91 | 1-Aminobenzol-2,5-disulfonsäure | Aminobenzol |
| 92 | " | 1-Amino-3-methylbenzol |
| 93 | " | 3-Aminophenylharnstoff |
| 94 | " | 1-Amino-3-hydroxyacetylaminobenzol |
| 95 | " | 1-Amino-3-acetylamino-6-methoxybenzol |
| 96 | " | 1-Amino-3-acetylamino-6-methylbenzol |
| 97 | " | 1-Amino-3-acetylaminobenzol |
| 98 | " | 1-Amino-3-methyl-6-methoxybenzol |
| 99 | " | 1-Amino-3-ureido-6-methylbenzol |
| 100 | " | N-Äthylanilin |
| 101 | " | 1-Äthylamino-3-methylbenzol |
| 102 | " | 1-Amino-2-methylbenzol |
| 103 | " | 1-Amino-2,5-dimethylbenzol |
| 104 | Anilin-2,4-disulfonsäure | Aminobenzol |
| 105 | " | 1-Amino-3-methylbenzol |
| 106 | " | 3-Aminophenylharnstoff |
| 107 | " | 1-Amino-3-hydroxyacetylaminobenzol |
| 108 | " | 1-Amino-3-acetylamino-6-methoxybenzol |
| 109 | " | 1-Amino-3-acetylamino-6-methylbenzol |

Aminoazoverbindung aus

| Nr. | Diazokomponente | Kupplungskomponente |
|---|---|---|
| 110 | Anilin-2,4-disulfonsäure | 1-Amino-3-acetylaminobenzol |
| 111 | " | 1-Amino-3-methyl-6-methoxybenzol |
| 112 | " | 1-Amino-3-ureido-6-methylbenzol |
| 113 | " | N-Äthylanilin |
| 114 | " | 1-Äthylamino-3-methylbenzol |
| 115 | " | 1-Amino-2-methylbenzol |
| 116 | " | 1-Amino-2,5-dimethylbenzol |
| 117 | 1-Amino-2,5-disulfo-4-methoxy-benzol | Aminobenzol |
| 118 | " | 1-Amino-3-methylbenzol |
| 119 | " | 3-Aminophenylharnstoff |
| 120 | " | 1-Amino-3-hydroxyacetylaminobenzol |
| 121 | " | 1-Amino-3-acetylamino-6-methoxybenzol |
| 122 | " | 1-Amino-3-acetylamino-6-methylbenzol |
| 123 | " | 1-Amino-3-acetylaminobenzol |
| 124 | " | 1-Amino-3-methyl-6-methoxybenzol |
| 125 | " | 1-Amino-3-ureido-6-methylbenzol |
| 126 | " | N-Äthylanilin |
| 127 | " | 1-Äthylamino-3-methylbenzol |
| 128 | " | 1-Amino-2-methylbenzol |
| 129 | " | 1-Amino-2,5-dimethylbenzol |

| Nr. | Aminoazoverbindung aus<br>Diazokomponente | Kupplungskomponente |
|---|---|---|
| 130 | 1-Amino-2,4-disulfo-6-methyl-benzol | Aminobenzol |
| 131 | " | 1-Amino-3-methylbenzol |
| 132 | " | 3-Aminophenylharnstoff |
| 133 | " | 1-Amino-3-hydroxyacetylaminobenzol |
| 134 | " | 1-Amino-3-acetylamino-6-methoxybenzol |
| 135 | " | 1-Amino-3-acetylamino-6-methylbenzol |
| 136 | " | 1-Amino-3-acetylaminobenzol |
| 137 | " | 1-Amino-3-methyl-6-methoxybenzol |
| 138 | " | 1-Amino- -ureido-6-methylbenzol |
| 139 | " | N-Äthylanilin |
| 140 | " | 1-Äthylamino-3-methylbenzol |
| 141 | " | 1-Amino-2-methylbenzol |
| 142 | " | 1-Amino-2,5-dimethylbenzol |
| 143 | 1-Amino-benzol-4-sulfonsäure | Aminobenzol |
| 144 | " | 1-Amino-3-methylbenzol |
| 145 | " | 3-Aminophenylharnstoff |
| 146 | " | 1-Amino-3-hydroxyacetylaminobenzol |
| 147 | " | 1-Amino-3-acetylamino-6-methoxybenzol |
| 148 | " | 1-Amino-3-acetylamino-6-methylbenzol |
| 149 | " | 1-Amino-3-acetylaminobenzol |

| Nr. | Aminoazoverbindung aus Diazokomponente | Kupplungskomponente |
|---|---|---|
| 150 | 1-Amino-benzol-4-sulfonsäure | 1-Amino-3-methyl-6-methoxybenzol |
| 151 | " | 1-Amino-3-ureido-6-methylbenzol |
| 152 | " | N-Äthylanilin |
| 153 | " | 1-Äthylamino-3-methylbenzol |
| 154 | " | 1-Amino-2-methylbenzol |
| 155 | " | 1-Amino-2,5-dimethylbenzol |

Patentansprüche

1) Faserreaktive Azofarbstoffe der Formel

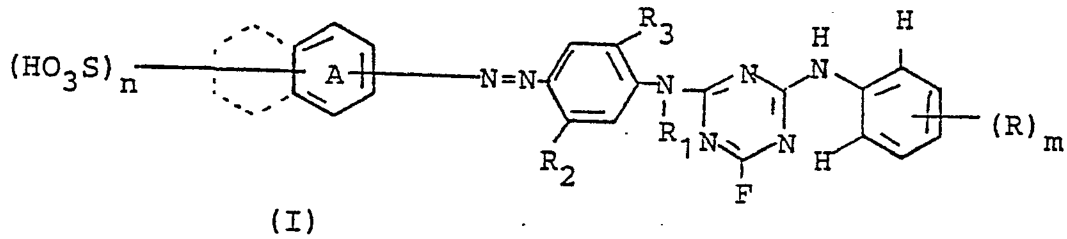

(I)

worin

der Benzol- bzw. Naphthalinring A außer den $SO_3H$-Gruppen noch weitere Substituenten enthalten kann,

R = Substituent, welcher im neutralen wäßrigen Medium nicht dissoziiert

$R_1$= Wasserstoff oder $C_1$-$C_4$-Alkyl

$R_2$= Wasserstoff, gegebenenfalls substituiertes $C_1$-$C_4$-Alkyl, gegebenenfalls substituiertes $C_1$-$C_4$-Alkoxy, gegebenenfalls substituiertes Acylamino der Formel

$$NH - CO - R_4$$

wobei $R_4$ für gegebenenfalls substituiertes $C_1$-$C_4$-Alkyl, gegebenenfalls substituiertes Aryl, gegebenenfalls substituiertes Amino, Wasserstoff oder COOH steht

$R_3$ = Wasserstoff,
gegebenenfalls substituiertes $C_1$-$C_4$-Alkyl,
gegebenenfalls substituiertes $C_1$-$C_4$-Alkoxy,
COOH, $SO_3H$ oder Halogen

n = 1, 2 oder 3

m = 0, 1 oder 2.

2) Farbstoffe der Formel

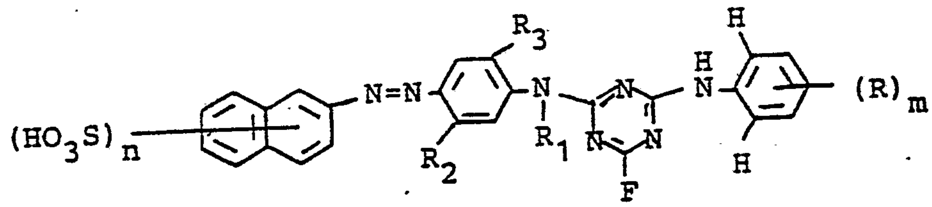

worin
R, $R_1$, $R_2$, $R_3$, m und n die in Anspruch 1 angegebene Bedeutung haben.

3) Farbstoffe der Formel

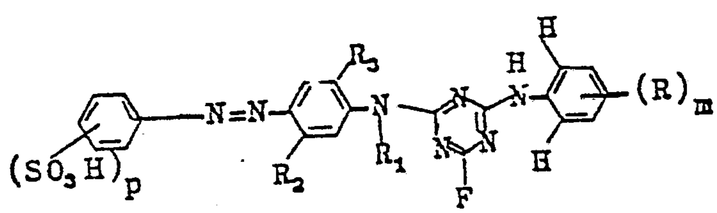

worin
R, $R_1$, $R_2$, $R_3$ und m die in Anspruch 1 angegebene Bedeutung haben und
p = 1 oder 2.

4) Farbstoffe der Formel

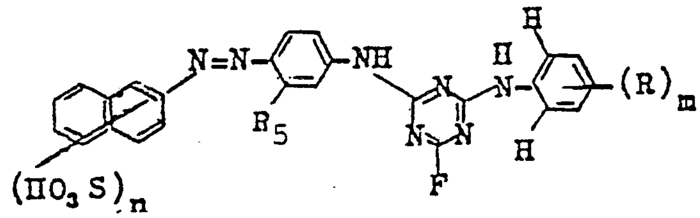

worin
R, m und n die in Anspruch 1 angegebene Bedeutung haben und
$R_5$ = Methyl, Acetylamino oder Ureido.

5) Farbstoffe der Formel

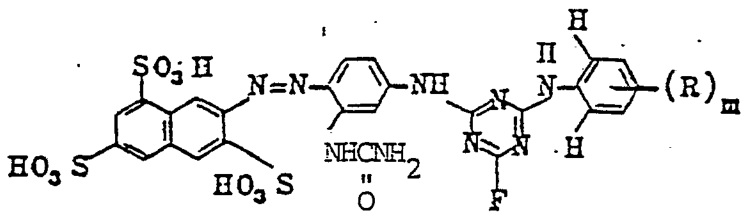

worin
R und m die in Anspruch 1 angegebene Bedeutung haben.

6) Farbstoffe der Ansprüche 1) bis 5), bei denen m = 0.

7) Farbstoffe der Ansprüche 1) bis 5), bei denen m = 1 und R = $CH_3$, $OCH_3$ oder Cl.

8) Verfahren zur Herstellung von faserreaktiven Azofarbstoffen der Formel (I) aus Anspruch 1)

in welcher die Reste R, $R_1$, $R_2$, $R_3$ sowie A, m und n die dort angegebene Bedeutung haben,

dadurch gekennzeichnet, daß man Farbstoffe der Formel

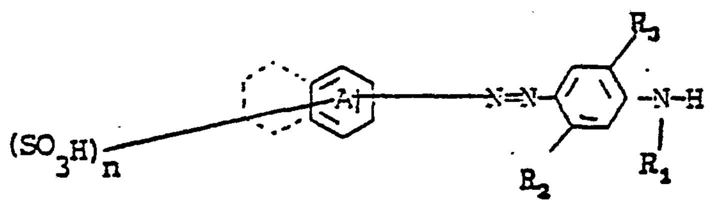

worin
$R_1$, $R_2$, $R_3$, A und n die in Anspruch 1 angegebene Bedeutung haben, mit 2,4,6-Trifluor-1,3,5-triazin unter Abspaltung von Fluorwasserstoffsäure kondensiert und die resultierende Difluorverbindung mit einem Amin der Formel

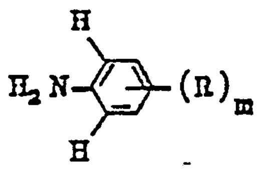

worin
R und m die in Anspruch 1 angegebene Bedeutung haben, unter Abspaltung von Fluorwasserstoffsäure umsetzt.

9) Verwendung von faserreaktiven Azofarbstoffen gemäß Anspruch 1) zum Färben und Bedrucken von hydroxylgruppen- und/oder stickstoffhaltigen Fasermaterialien.

10) Mit faserreaktiven Azofarbstoffen gemäß Anspruch 1) gefärbtes oder bedrucktes hydroxylgruppen- und/oder stickstoffhaltiges Fasermaterial.

0053750

Europäisches Patentamt

# EUROPÄISCHER RECHERCHENBERICHT

Nummer der Anmeldung

EP 81 10 9832

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.3) |
|---|---|---|---|
| A | GB - A - 2 003 910 (CIBA-GEIGY)<br>* Beispiele 2,7; Seite 12, nr. 1-6; Seite 11, Zeilen 14-19 *<br>& DE - A - 2 838 540<br>-- | 1,2, 4-10 | C 09 B 62/085<br>D 06 P 3/66<br>3/10 |
| A | FR - A - 2 441 645 (SANDOZ)<br>* Patentansprüche 1,2 *<br>& DE - A - 2 944 624<br>-- | 1,3 | |
| A | FR - A - 2 436 166 (BAYER)<br>* Patentansprüche 1-10 *<br>& DE - A - 2 840 380<br>-- | 1-10 | RECHERCHIERTE SACHGEBIETE (Int. Cl.3)<br>C 09 B 62/00 |
| A | FR - A - 2 335 570 (CIBA-GEIGY)<br>* Patentansprüche 1,9-11,20, 22,24 *<br>& DE - A - 2 657 341<br>-- | 1-10 | |
| A | FR - A - 1 561 704 (BAYER)<br>* Seite 86, Zeilen 5-8 *<br>& DE - A - 1 644 208<br>---- | 1 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 23-02-1982 | GINESTET |